# EUROPEAN PATENT APPLICATION

(11) **EP 2 270 666 A1**
(43) Date of publication of application: **05.01.2011**
(21) Application number: 09815804.1
(22) Date of filing: 27.07.2009
(51) Int. Cl.: G06F 12/00, G06F 3/06

(54) **STORAGE MANAGEMENT MEDIA SERVER AND METHOD OF CONTROLLING THE SAME**

(30) Priority: 29.09.2008 JP 2008249826
(71) Applicant: Hitachi Software Engineering Co., Ltd., Shinagawa-ku Tokyo 140-0002 (JP)
(72) Inventor: KIRIHATA, Yasuhiro, Tokyo 140-0022 (JP)
(74) Representative: Liesegang, Eva
(86) International application number: PCT/JP2009/003523
(87) International publication number: WO 2010/035382

(57) **Abstract**

In order to enable backup and restoration of data even in a hetero file format environment by using preexisting backup tools, the present invention provides with the following configuration. The configuration is **characterized by**: a BK tool cooperative module 11 for mediating the instruction of such as backup received from a master server 2; a data handling module 12 capable of such as backup and restoration in response to the instruction; a file format analyzing module 13 capable of recognizing file format of a file stored in a sub-volume 32; and FS drivers of plural types necessary to each type of file system; wherein the data handling module 12, in response to a received instruction, is capable of mounting a sub-volume 32 via a FS driver (1∼N) 14 conformable to file format of a designated file, thereby allowing backup, restore and so on.

## Description

### FIELD OF THE INVENTION

The present invention relates to a storage manage media server and control method of the same capable of backup and restoration in a network environment, particularly to those operable even in an environment containing such as miscellaneous hosts with different types of file systems.

### BACKGROUND OF THE INVENTION

In recent years, in enterprise offices, digitization of information has been progressed and causes rapid increase in the amount of stored electronic data, resulting in strong needs for a large-scale storage for storing them. Further, the number of hosts has been increasing and also service applications have been more diverse in type. Furthermore, it is not rare to manage files prepared on a multi-platform including miscellaneous file systems of plural types; and in such an environment, backup from the storage and restoration thereto are sometimes associated with difficulty, obstacle, and the like.

As a technology for solving such difficulty, obstacle and the like, a technology is known that introduces, for each host, another server of which OS is the same as that of a corresponding host. According to this technology, original data is to be copied from a main-volume to a sub-volume and back-upped by a backup client application working in each "another" server. However, this technology is likely to introduce many "another" servers, thereby to result in very large costs.

Further, in this technology, backing-up data is to be read out to each "another" server and then sent to a media server for mediating the processing, over LAN, SAN (Storage Area Network), etc. However, such communication for the backup results in oppressing frequency band of the LAN, SAN, etc. Implementing a separate dedicated communication line for data backup would lead to costs for its introduction and maintenance.

Further, a technology that unifies the miscellaneous file formats is also known (refer, for example, to patent document 1.) According to the technology described in the patent document 1, the aforementioned SAN is used and file formats of files prepared under different host OSs are transformed to a file format supported by the SAN. Thereby, it is unnecessary to provide the aforementioned "another" server.

Moreover, a LAN free backup technology is also known in which SAN is used while LAN is not used (refer, for example, to patent document 2.) According to the technology described in the patent document 2, a network file server module is to copy backing-up files to a destination volume in a storage and then copy it to an external storage apparatus over the SAN.
[Patent Document 1] Japanese Patent Application Laid-Open Publication No. 2002-007174
[Patent Document 2] Japanese Patent Application Laid-Open Publication No. 2004-054720

### DISCLOSURE OF THE INVENTION

### [PROBLEM TO BE SOLVED]

However, the prior art disclosed in the patent document 1 has a problem as described below. First of all, since some backup files are obtained after the file format transformation, these files would be accompanied with file format change. Therefore, a host without file system supporting the SAN (hereinafter, this file system is referred to as "SAN-FS".) cannot restore a file in some cases. Further, since the file format transformation is performed real-time by the SAN-FS, this technology is not applicable to a system which is not acceptable of such overhead (transformation). Furthermore, applying this technology to the working circumstance needs to transform file formats of all such existing files including those already back-upped, to the SAN-FS file format. Therefore, this technology would not be the practical solution.

Also, the prior art described in the patent document 2 has a problem as described below. According to this technology, the network file server module enables to recognize file format and NAS (Network Attached Storage) is used. Therefore, this technology is not applicable to such a hetero, miscellaneous file format environment in SAN storage. In addition, copying files would be a burden on the NAS with storages itself, thereby degradation of quality of regular file services may occur during the on-line backup.

Considering the aforementioned state of art, the objective of the present invention is to provide with a storage manage media server and control method of the same which enable backup and restoration of data even in a hetero file format environment by using preexisting backup tools.

### [CONFIGURATION FOR SOLVING THE PROBLEM]

In order to resolve the aforementioned problem, the present invention provides with the following configuration.
According to the invention of claim 1, a storage manage media server is characterized as follows. Namely, the media server is connected over SAN to a storage system with miscellaneous volumes, each storing files prepared under the management of different file system. The media server comprises file system drivers of plural types, each capable of mounting a volume storing files prepared under a conformable file system, and the drivers as a whole capable of mounting all desired volumes. The media server further comprises a format analyzer for analyzing file format of a file stored in a volume to select a conformable file system driver among said file system drivers of plural types, thereby mounting the volume via the selected file system driver. The media server furthermore comprises a data handler capable of requesting said format analyzer, with changing assignment of the file system driver in turn, to select a file system driver conformable to given file format and then reading out files from the volume mounted via the selected file system driver and thereby storing them to an external data storage.

According to the invention of claim 2, a storage manage media server is characterized as the media server of claim 1 with following additional configuration. Namely, the media server further comprises a backup tool cooperative unit capable of receiving an instruction over LAN, from a master server sending at least an instruction to backup and restore. The unit is further configured to control, responding to the received instruction, the data handler to perform a certain process, to a volume mounted to allow reading and/or writing.

According to the invention of claim 3, a control method of a storage manage media server is characterized as follows. Namely, the control method controls the media server connected over SAN to a storage system with miscellaneous volumes, each volume storing files prepared under the management of different file system, wherein the server includes: file system drivers of plural types, each capable of mounting a volume conforming to a file system and the drivers as a whole capable of mounting all desired volumes; a format analyzer capable of analyzing file format of a file stored in a mounted volume, and a data handler capable of reading out files from the mounted volume to store them to an external data storage. The control method comprises steps of: first step where the data handler controls, responding to an instruction of either backing-up or restoration, the file format analyzer to analyze file format of a file in a volume thereby select a conformable file system driver; second step where the data handler mounts via the selected file system driver a volume storing files to be back-upped or restored; and third step where the data handler performs backup from or restoration to the volume mounted in the second step.

According to the invention of claim 4, a control method of a storage manage media server is characterized as the control method of claim 3 with following additional configuration. Namely, the storage manage media server further includes a backup tool cooperative unit capable of receiving an instruction over LAN, from a master server sending at least an instruction to backup and restore, and controlling responding to the received instruction the data handler. The processes of first to third steps are performed under the control of the backup tool cooperative unit.

### [ADVANTAGE OF THE INVENTION]

According to the invention of claim 1, a storage manage media server is achievable which enables backup and restoration of data even in a hetero file format environment by using preexisting backup tools, since the storage manage media server is connected over SAN to a storage system with miscellaneous volumes, each storing files prepared under the management of different file system, and the media server comprises: file system drivers of plural types, each capable of mounting a volume storing files prepared under a conformable file system, and the drivers as a whole capable of mounting all desired volumes; a format analyzer capable of mounting a volume via a conformable file system driver to analyze file format of a file stored in the volume; and a data handler capable of requesting the format analyzer, with changing assignment of the file system driver in turn, to analyze file format and then reading out files from the volume mounted via the file system driver conforming to the volume storing backing-up files and thereby storing them to an external data storage.

According to the invention of claim 1, in addition to the aforementioned advantage of claim 1, there is an advantage that the storage manage media server is controllable from an external apparatus, since the media server further comprises a backup tool cooperative unit capable of receiving an instruction over LAN, from a master server sending at least an instruction to backup and restore, and controlling responding to the received instruction the data handler to perform a certain process, to a volume mounted to allow reading and/or writing.

According to the invention of claim 3, in addition to the aforementioned advantage of claim 1 or claim 2, there is an advantage that the control method of a storage manage media server is achievable which enables backup and restoration of data even in a hetero file format environment by using preexisting backup tools, since the media server is connected over SAN to a storage system with miscellaneous volumes, each volume storing files prepared under the management of different file system, and the media server includes: file system drivers of plural types, each capable of mounting a volume conforming to a file system and the drivers as a whole capable of mounting all desired volumes; a format analyzer capable of analyzing file format of a file stored in a mounted volume and a data handler capable of reading out files from the mounted volume to store them to an external data storage, and the control method comprises steps of: first step where the data handler controls, responding to an instruction of either backing-up or restoration, the file format analyzer to analyze file format of a file in the volume which is accessible via a conformable file system driver; second step where the data handler mounts via the selected file system driver a volume storing files to be back-upped or restored; and third step where the data handler performs backup from or restoration to the volume mounted in the second step.

According to the invention of claim 4, in addition to the aforementioned advantage of any of preceding claims 1-3, there is an advantage that the storage manage media server is controllable from an external apparatus, since the storage manage media server further includes a backup tool cooperative unit capable of receiving an instruction over LAN, from a master server sending at least an instruction to backup and restore, and controlling responding to the received instruction the data handler; and the processes of first to third steps are performed under the control of the backup tool cooperative unit.

### BRIEF EXPLANATION OF DRAWINGS

FIG. 1 is a block configuration view showing part of a network environment in which a storage manage media server according to the present invention (hereinafter, referred to as "media server".) is placed.
FIG. 2 is a schematic view for assisting the understanding of logical configuration of the media server 1 for the backup and restoration processes.
FIG. 3 is a view illustrating flowchart for assisting the understanding of the pre-stage process which is performed in advance of the backup and restoration.
FIG. 4 is a view showing a flowchart for assisting the understanding of the backup process.
FIG. 5 is a view showing a flowchart for assisting the understanding of the restoration process.

### BEST MODE OF THE EMBODIMENT

Now, an embodiment according to the present invention will be described in detail, with reference to drawings showing an embodiment. However, nothing in this description shall be construed to limit the scope of the present invention.

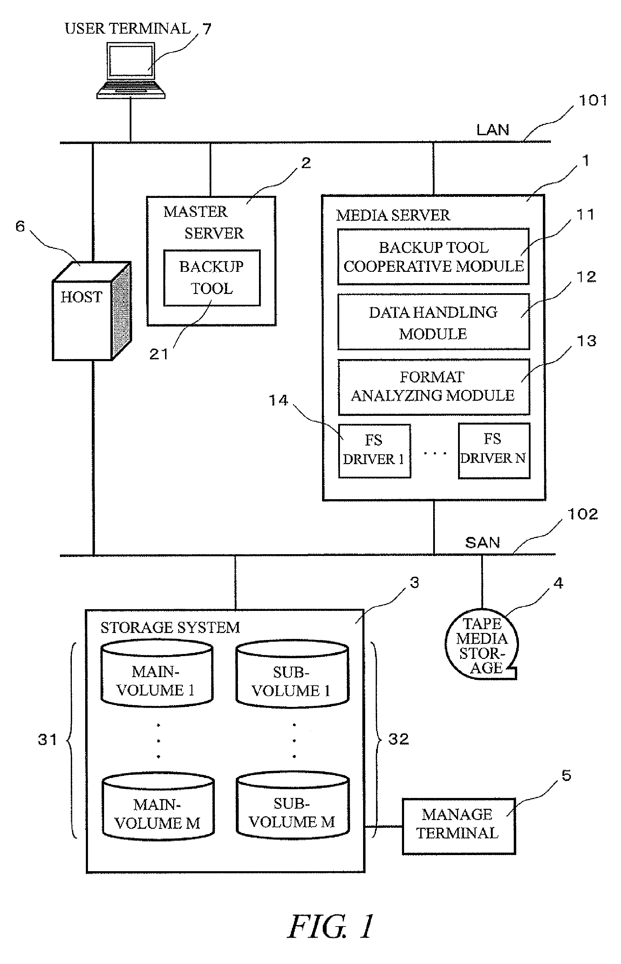

FIG. 1 is a block configuration view showing part of a network environment in which a storage manage media server according to the present invention (hereinafter, referred to as "media server".) is placed. As shown FIG. 1, this network environment is placed with a media server 1 capable of mediating to perform such as backup, a master server 2 capable of sending an instruction such as to backup to the media server 1, a storage system 3, tape media storage 4 for backup, and so on.

The media server 1 is communicatively connected with the storage system 3 and the tape media storage 4 via SAN (Storage Area Network) 102 to perform certain processing such as backup, restoration, and so on. The media server 1 and the master sever 2 are connected each other via LAN (Local Area Network) 101 and are communicable in conformity with NDMP (Network Data Management Protocol). Between them 1-2, communication with low data rate is performed so as not to hinder the communication between the others. The master server 2 is implemented with a backup tool 21 for backup, restoration, and so on.

It should be noted that the storage system 3 has plural volumes for storing data and some of them are assigned as volumes 31 storing original data including backing-up original data (hereinafter, referred to as "main-volume".) Further, the storage system 3 is connected with a manage terminal 5 for the management of the former, thereby allowing to copy data from the main-volume 31 to the other volume 32 (hereinafter, referred to as "sub-volume".)

Also, the LAN 101 is connected with a host 6 capable of such as provision of web page and e-mail delivery by way of this, a user terminal 7 accessing the host 6, and so on. The host 6 is mounted, namely accessibly connected, with the main-volume 31 in the storage system 3, so that the host 6 is capable of storing and reading out various kinds of data to/from the main-volume 31.

The media server 1 has a BK (Backup) tool cooperative module 11, a data handling module 12, a format analyzing module 13, and FS drivers (1∼N) 14. Certain information that the media server 1 has received from the master server 2 is to be output to the BK tool cooperative module 11 and it includes such as an instruction to backup and a backup list.

The BK tool cooperative module 11 is operative to receive an instruction from the backup tool 21 of the master server 2 as described above, is thereby capable of mediating process including backup and restoration. In concrete, the BK tool cooperative module 11 is configured to output an instruction from the backup tool 21, instruction-dependant information, and so on. As a result, the BK tool cooperative module 11, similarly the master server 2, is operative to control the data handling module 12. Backup is performed for data copied in the sub-volume (1∼M) 32. Further, the BK tool cooperative module 11 is configured to send such as acknowledge code to the backup tool 21.

The data handling module 12, responding to the output from the BK tool cooperative module 11, is operative to perform backup from the designated sub-volume 32 to the tape media storage 4, restoration as a reverse processing, and so on. These processes are performed, if necessary, through the format analyzing module 13 and the FS driver (1∼N) 14. During the restoration, for example, a file designated among the backup data in the tape media storage 4 is chosen to be copied to a certain sub-domain in the sub-volume 32.

The format analyzing module 13 is operative to recognize the file format of a file in the sub-volume (1∼M) 32.

Each FS driver (1∼N) 14 is to be implemented if it is necessary for some file systems, and is operable to mediate so as to mount sub-volume (1∼M) 32 to which files managed under the conformable file system have copied. Hereinafter, all necessary FS drivers (1∼N) 14 are premised to be implemented in advance.

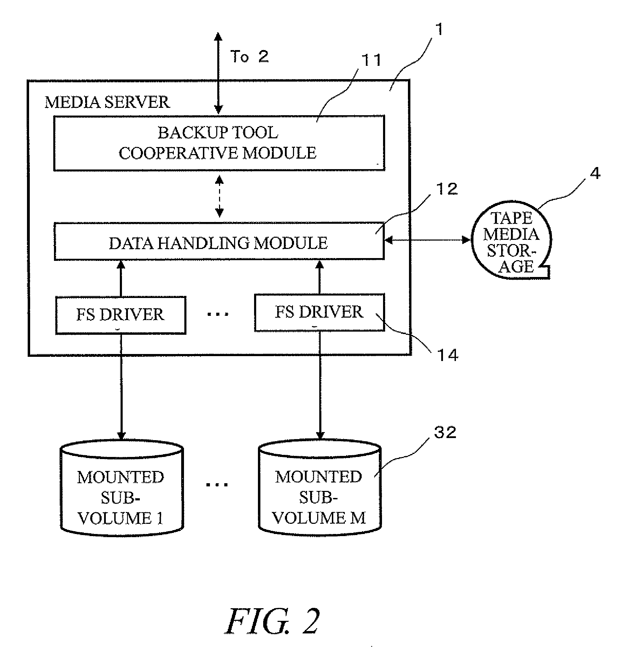

FIG. 2 is a schematic view for assisting the understanding of logical configuration of the media server 1 for the backup and restoration processes. As shown in FIG. 2, the BK tool cooperative module 11 receives an instruction from the master server 2, then controls the FS driver (1∼N) 14 via the data handling module 12, and then mounts a sub-volume (1∼M) 32 via the conformable driver (I₁∼I_{M}) 14. Next, the BK tool cooperative module 11 copies from the sub-volume (1∼M) 32 mounted via the FS driver (I₁∼I_{M}) 14, a group of files designated by the backup tool 21 and then stores them to the tape media storage 4.

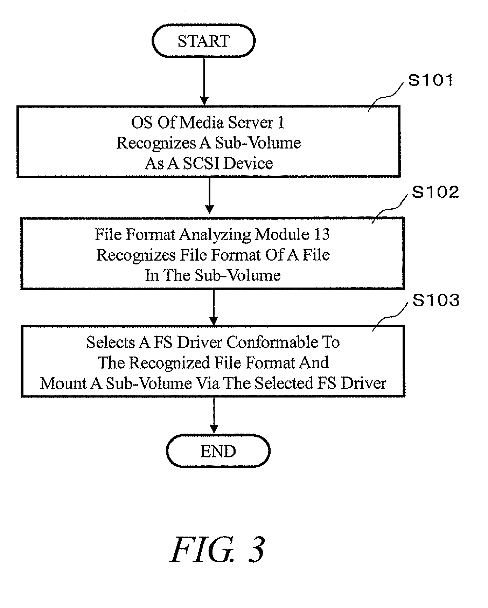

FIG. 3 is a view illustrating flowchart for assisting the understanding of the pre-stage process which is performed in advance of the backup and restoration. It should be noted that a sub-volume 32 of the backing-up main-volume 31 is premised to be already provided in the storage system 3 via the manage terminal 5, in advance of the pre-stage process. Also, information about backing-up files is supposed to be prepared in advance.

First, OS of the media server 1 recognizes the sub-volume 32 as a SCSI device (S101). At this moment, file system format (NTFS, FAT, etc.) of the sub-volume 32 is not yet known. Next, the file format analyzing module 13 recognizes file format of a file in the sub-volume 32 (S102). In concrete, it 13 throws a SCSI command to read a certain domain of the sub-volume, and then recognizes the file format based on the read data. Next, a FS driver 14 supporting the recognized file format is selected and then mediates to mount the sub-volume 32 (S103).

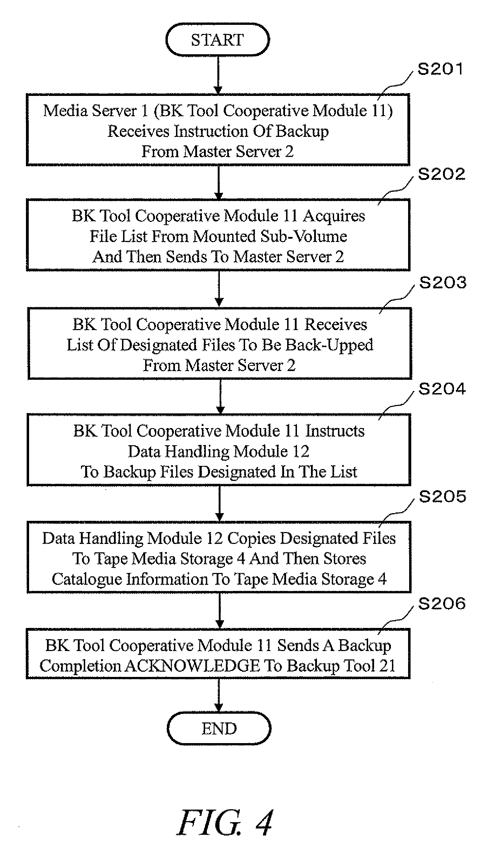

FIG. 4 is a view showing a flowchart for assisting the understanding of the backup process. First, the media server 1 receives a backup instruction from the master server 2 and then outputs it to the BK tool cooperative module 11 (S201). It is also possible to represent this process as a process that the backup tool 21 accesses the BK tool cooperative module 11 implemented in the media server 1 in conformity with the NDMP and then instructs.

Next, the BK tool cooperative module 11, responding to the received instruction, acquires a file list of files in the already mounted sub-volume (1∼M) 32 and then returns it to the master server (S202). It is allowable that this file list is determined to conform to a certain format . Next, the BK tool cooperative module 11 receives from the master server 2 a list of designated files to be backup (S203).

Next, the BK tool cooperative module 11 instructs the data handling module 12 to backup the files designated in the list (S204). The data handling module 12 copies the designated files to the tape media storage 4 and then stores catalogue information consisting of list of the copied files and so on to the tape media storage 4 (S205). Next, the BK tool cooperative module 11 sends an acknowledge notifying completion of backing-up, to the backup tool 21 (S206).

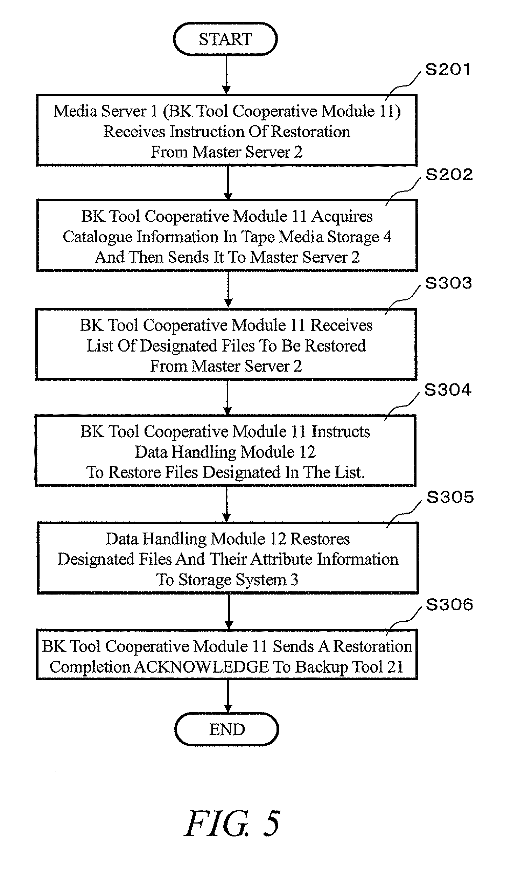

FIG. 5 is a view showing a flowchart for assisting the understanding of the restoration process. First, the media server 1, namely the backup tool 21, receives a restore instruction from the master server 2 and then outputs to the BK tool cooperative module 11 (S301).

Next, the BK tool cooperative module 11 acquires the catalogue information stored in the tape media storage 4 and forwards it to the master server 2 (S302). Next, the BK tool cooperative module 11 receives from the master server 2 a list of designated files to be restored (S303).

Next, the BK tool cooperative module 11 instructs the data handling module 12 to restore the files designated in the list (S304). The data handling module 12 copies the designated files and the file attribute information from the tape media storage 4 and the restores them to the storage system 3 (S305). Next, the BK tool cooperative module 11 sends an acknowledge notifying the completion of the restoration to the backup tool 21 (S306).

According to the configuration of the present invention, even if different file formats coexist in mixed state, backup and restoration are achievable via the media server 1 in a batch process without introducing another server for each host 6. Further, since backup data is acquired through direct access to the storage by way of the SAN 102, it is unnecessary to suck backup data temporarily and then forward it over the SAN 102 additionally. As a result, efficient backup is achievable without oppressing frequency band for the SAN 102 during data communication for backup.

### INDUSTRIAL APPLICBILITY

A storage manage media server and control method of the same according to the present invention are applicable in such as hardware fabrication industries and software fabrication industries, and contribute to enhance the usefulness of products related these fields, in an environment including miscellaneous files prepared by OSs of different kinds.

## Claims

1. A storage manage media server connected over SAN to a storage system with miscellaneous volumes, each storing files prepared under the management of different file system, said server comprising:
file system drivers of plural types, each capable of mounting a volume storing files prepared under a conformable file system, and the drivers as a whole capable of mounting all desired volumes;
a format analyzer for analyzing file format of a file stored in a volume to select a conformable file system driver among said file system drivers of plural types, thereby mounting the volume via the selected file system driver; and
a data handler capable of requesting said format analyzer, with changing assignment of the file system driver in turn, to select a file system driver conformable to given file format and then reading out files from the volume mounted via the selected file system driver and thereby storing them to an external data storage.

2. The storage manage media server of claim 1, further comprising a backup tool cooperative unit capable of receiving an instruction over LAN, from a master server sending at least an instruction to backup and restore, and controlling responding to the received instruction the data handler to perform a certain process, to a volume mounted to allow reading and/or writing.

3. A control method of a storage manage media server, the server connected over SAN to a storage system with miscellaneous volumes, each volume storing files prepared under the management of different file system, said server including: file system drivers of plural types, each capable of mounting a volume conforming to a file system and the drivers as a whole capable of mounting all desired volumes; a format analyzer capable of analyzing file format of a file stored in a mounted volume and a data handler capable of reading out files from the mounted volume to store them to an external data storage, said method comprising steps of:
first step where said data handler controls, responding to an instruction of either backing-up or restoration said file format analyzer to analyze file format of a file in a volume thereby select a conformable file system driver;
second step where said data handler mounts via the selected file system driver a volume storing files to be back-upped or restored; and
third step where said data handler performs backup from or restoration to the volume mounted in the second step.

4. The control method of claim 3, wherein said storage manage media server further including a backup tool cooperative unit capable of receiving an instruction over LAN, from a master server sending at least an instruction to backup and restore, and controlling responding to the received instruction the data handler; and the processes of first to third steps are performed under the control of said backup tool cooperative unit.
